# EUROPEAN PATENT APPLICATION

(11) **EP 1 122 168 A1**
(43) Date of publication of application: **08.08.2001**
(21) Application number: 01200358.8
(22) Date of filing: 01.02.2001
(51) Int. Cl.: B65B 3/02, B65B 55/02

(54) **Method of molding and filling aseptic containers.**

(30) Priority: 02.02.2000 JP 2000024961
(71) Applicant: Shikoku Kakoki Co., Ltd., Itano-gun, Tokushima 771-0287 (JP)
(72) Inventor: Tawa, Shigenori, c/o Shikoku Kakoki Co., Ltd., Itano-gun, Tokushima 771-0287 (JP); Sakabe, Keiji, c/o Shikoku Kakoki Co., Ltd., Itano-gun, Tokushima 771-0287 (JP); Miki, Takao, c/o Shikoku Kakoki Co., Ltd., Itano-gun, Tokushima 771-0287 (JP); Ueda, Michio, c/o Shikoku Kakoki Co., Ltd., Itano-gun, Tokushima 771-0287 (JP)
(74) Representative: Van kan, Johan Joseph Hubert, Ir.

(57) **Abstract**

A method of molding and filling aseptic containers comprises the steps of sterilizing preforms (F), heating the sterilized preforms to a temperature appropriate to orientation, molding the heated preforms (F) into containers (B) by an orientation blow molding process, filling the molded containers (B) with an aseptic liquid and hermetically closing the filled containers each with an aseptic closure (C). The sterilizing step is performed by bringing a sterilizing gas into contact with surfaces of the preforms.

## Description

### BACKGROUND OF THE INVENTION

The present invention relates to a method of molding aseptic containers, such as plastic bottles, and filling the containers with contents.

Conventional methods of the type mentioned include, for example, the one disclosed in JPA 3-290226 (1991) and comprising the steps of sterilizing preforms, heating the sterilized preforms to a temperature appropriate to orientation, molding the heated preforms into containers by an orientation blow molding process, filling the molded containers with an aseptic liquid and hermetically closing the filled containers each with an aseptic closure. The sterilizing step is performed by dipping the preforms in a sterilizing solution, withdrawing the preforms from the solution and thereafter applying dry hot air to the preforms to remove the adhering solution by drying.

The dry hot air used in the conventional method for drying the preforms can not be heated to a high temperature to avoid the likelihood of deforming the preforms. The preforms therefore require much time for drying. Further unless dried completely, the preforms can not be heated uniformly in the subsequent step. Although the preforms need to be uniformly heated entirely for blow molding, it is likely that the hot air applied to the preforms for drying will impair the uniformity of heating.

### SUMMARY OF THE INVENTION

An object of the present invention is to provide an aseptic container molding-filling method which is free of all of these problems and which makes it possible to sterilize preforms within a shortened period of time and to hold the preforms uniformly heated for blow molding.

The present invention provides a method of molding and filling aseptic containers which comprises the steps of sterilizing preforms, heating the sterilized preforms to a temperature appropriate to orientation, molding the heated preforms into containers by an orientation blow molding process, filling the molded containers with an aseptic liquid and hermetically closing the filled containers each with an aseptic closure, the method being characterized in that the sterilizing step is performed by bringing a sterilizing gas into contact with surfaces of the preforms.

With the aseptic container molding-filling method of the present invention, the sterilizing step is performed by bringing the sterilizing gas into contact with the surfaces of the preforms, so that there is no need to remove the sterilizing solution from the preforms as conventionally practiced. This makes it possible to sterilize the preforms within a shortened period of time and to hold the preforms uniformly heated for blow molding.

Preferably, the sterilizing step, heating step, molding step, filling step and closing step are all performed within an aseptic chamber.

The sterilizing gas to be brought into contact with the surfaces of the preforms may be produced by applying an aqueous solution of hydrogen peroxide to a heated body dropwise within a gasifying tank.

The heating step may be performed by applying hot air to the preforms so as to heat the preforms to 90 to 120° C.

The molding step may be performed by fitting the preforms into a mold and injecting a pressurized aseptic gas into the mold.

The closing step may be performed by feeding caps sterilized in advance outside the aseptic chamber and fitting the caps over mouths of the respective containers.

### BRIEF DESCRIPTION OF THE DRAWING

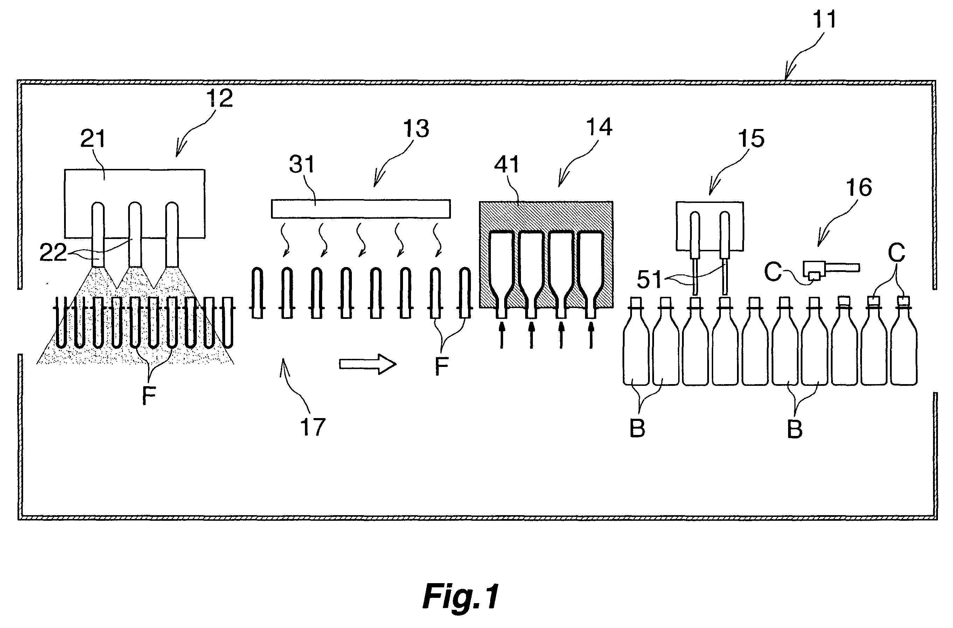

FIG. 1 is a diagram schematically showing the construction of an apparatus for use in a method of molding and filling aseptic containers according to the invention.

### DETAILED DESCRIPTION OF THE PREFERRED EMBODIMENT

An embodiment of the present invention will be described next with reference to the drawing.

FIG. 1 shows stepwise a process of molding plastic bottles B from bottomed tubular preforms F made from polyethylene terephthalate.

Arranged within an aseptic chamber 11 which is maintained at a positive pressure with aseptic air are a device 12 for sterilizing preforms F, a device 13 for heating the sterilized preforms F, a device 14 for molding the heated preforms F into bottles B, a device 15 for filling the molded bottles B with a liquid, a capping device 16 for fitting caps C over the mouths of the filled bottles B, and a conveyor 17 extending along these devices 12 to 16 in succession for transporting the performs F as positioned with the mouths up for the sterilizing device 12 or as positioned with the mouths down for the heating device 13.

The sterilizing device 12 comprises a gasifying tank 21 and conduits 22 extending from the tank 21 to a position above the path of transport of preforms. A sterilizing gas is produced within the tank 21 by applying an aqueous solution of hydrogen peroxide to a heated body dropwise. The gas produced is guided through the conduits 22 to the position of the preforms F being transported by the conveyor 17 and brought into contact with the preforms F. Ethylene oxide gas, ozone gas or the like may alternatively be used in place of hydrogen peroxide gas.

The heating device 13 has a hot air heater 31. The preforms F are heated with hot air to an appropriate orientation temperature of about 90° C to about 120° C.

The molding device 14 has a mold 41. The preforms F are fitted into the mold 41, into which a pressurized aseptic gas is injected, whereby the preforms F are biaxially oriented and blow-molded into bottles B.

The filling device 15 has filling nozzles 51. An aseptic liquid is filled into the molded bottles B by the nozzles 51. Caps C sterilized in advance outside the chamber 11 are fed to the capping device 16.

## Claims

1. A method of molding and filling aseptic containers comprising the steps of sterilizing preforms, heating the sterilized preforms to a temperature appropriate to orientation, molding the heated preforms into containers by an orientation blow molding process, filling the molded containers with an aseptic liquid and hermetically closing the filled containers each with an aseptic closure, the method being characterized in that the sterilizing step is performed by bringing a sterilizing gas into contact with surfaces of the preforms.

2. A method of molding and filling aseptic containers according to claim 1 wherein the sterilizing step, heating step, molding step, filling step and closing step are all performed within an aseptic chamber.

3. A method of molding and filling aseptic containers according to claim 1 wherein the sterilizing gas to be brought into contact with the surfaces of the preforms is produced by applying an aqueous solution of hydrogen peroxide to a heated body dropwise within a gasifying tank.

4. A method of molding and filling aseptic containers according to claim 1 wherein the heating step is performed by applying hot air to the preforms so as to heat the preforms to 90 to 120° C.

5. A method of molding and filling aseptic containers according to claim 1 wherein the molding step is performed by fitting the preforms into a mold and injecting a pressurized aseptic gas into the mold.

6. A method of molding and filling aseptic containers according to claim 2 wherein the closing step is performed by feeding caps sterilized in advance outside the aseptic chamber and fitting the caps over mouths of the respective containers.
